# DEMANDE DE BREVET EUROPEEN

(11) **EP 2 110 594 A1**
(43) Date de publication de la demande: **21.10.2009**
(21) Numéro de dépôt: 09157721.3
(22) Date de dépôt: 09.04.2009
(51) Int. Cl.: F16L 55/052, F17D 1/20

(54) **Réservoir hydropneumatique anti-bélier pour canalisation hydraulique pourvu d'un dispositif d'obturation amélioré**

(30) Priorité: 17.04.2008 FR 0852618
(71) Demandeur: Charlatte Reservoirs, 89400 Migennes (FR)
(72) Inventeur: Roche, Emile, 01000, SAINT DENIS LES BOURGS (FR)
(74) Mandataire: Delprat, Olivier

(57) **Abrégé**

Ce réservoir hydropneumatique pour canalisation hydraulique comprend un tube plongeur (12) s'étendant dans le réservoir (10) et débouchant vers l'extérieur du réservoir, et un dispositif (15) d'obturation du tube plongeur assurant la mise en communication sélective du tube (12) avec l'extérieur en fonction du niveau de fluide dans le réservoir.

Le dispositif d'obturation comprend des moyens d'obturation (16) et des moyens (17) de commande d'obturation séparés des moyens d'obturation de sorte que l'ouverture et la fermeture des moyens d'obturation s'effectuent sans contact desdits moyens d'obturation avec le fluide emplissant le tube plongeur.

## Description

L'invention concerne le domaine des réservoirs hydropneumatiques et se rapporte aux réservoirs hydropneumatiques anti-bélier à régulation d'air automatique.

De tels réservoirs sont destinés à équiper une canalisation ou un réseau hydraulique qui peut être, notamment, un réseau de distribution d'eau potable ou d'irrigation, ou un réseau d'évacuation d'eaux usées ou de liquides chimiques.

Ce réservoir hydropneumatique anti-bélier est utilisé pour protéger la canalisation (ou le réseau) hydraulique afin de compenser des effets de dépression ou de surpression provoqués par exemple par un arrêt d'une pompe ou par une fermeture de vanne.

Le fonctionnement d'un tel réservoir est connu notamment par le brevet français n° 2 416 417 (ROCHE).

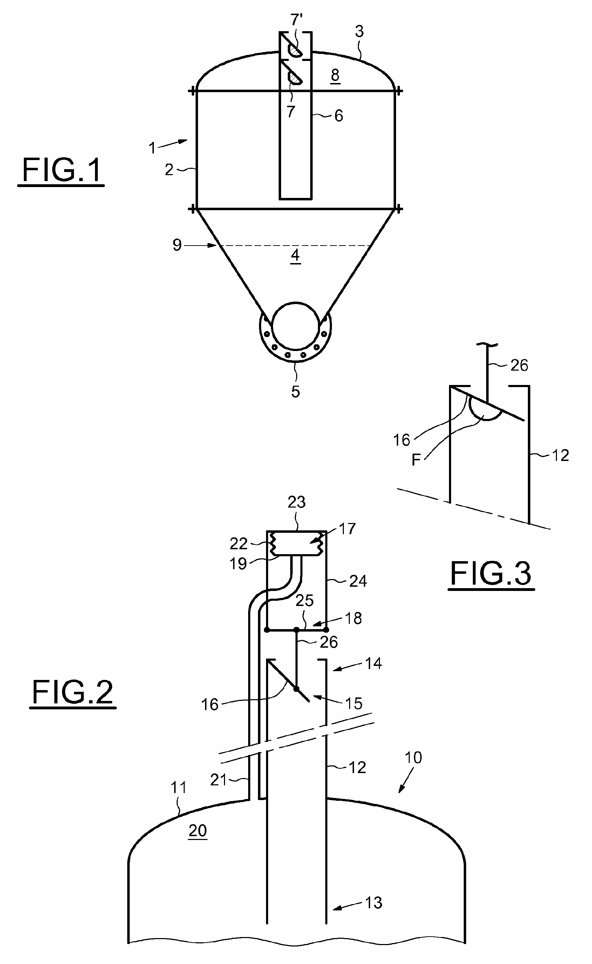

On représenté sur la figure 1, l'architecture générale d'un tel réservoir hydropneumatique.

Comme on le voit sur cette figure, le réservoir, désigné par la référence numérique générale 1, comporte un corps central 2, de hauteur variable suivant les applications, un couvercle elliptique 3 fixé sur la partie supérieure du corps 2, et un bac inférieur 4 monté sur la partie inférieure du corps 2 et pourvu de brides d'entrée et de sortie, telles que 5, par lesquelles le réservoir 1 est raccordé ici à une canalisation hydraulique (non représentée).

Le couvercle 3 est pourvu d'un tube plongeur 6 fixe qui s'étend dans le réservoir 1 et débouche vers l'extérieur du réservoir.

En partie supérieure, le tube plongeur 6 est pourvu d'une boîte à clapets comportant ici deux clapets 7 et 7' doublés pour des raisons de sécurité de fermeture.

Comme on le voit, le tube plongeur 6 délimite dans le réservoir une chambre de compression 8.

En fonctionnement, le réservoir 1 contient de l'eau ou un liquide quelconque en écoulement dans la canalisation et de l'air est enfermé dans le réservoir au dessus de la surface d'eau ou de liquide.

Chaque clapet est pourvu d'un flotteur, de sorte que la fermeture de la boîte à clapet s'effectue sous la poussée de l'eau lorsque cette dernière monte dans le tube plongeur 6 et atteint les flotteurs. La fermeture est assurée tant que le fluide se maintient dans cette position.

Le mode de fonctionnement de ce réservoir est le suivant.

En régime permanent de pompage de fluide dans la canalisation, le niveau de fluide dans la chambre de compression est stabilisé à un niveau situé entre le sommet du couvercle 3 et l'extrémité inférieure du tube plongeur 6, l'air situé dans la chambre de compression, au-dessus du fluide, étant comprimé.

Dans le tube central 6, le fluide a atteint le flotteur du clapet inférieur, provoquant une fermeture de ce dernier, et l'arrêt de l'ascension de l'eau dans le tube 6.

A l'arrêt de la pompe, pour combattre la dépression et assurer la protection de la canalisation en aval du réservoir, celui-ci se vide dans la canalisation.

Le réservoir fonctionne tout d'abord en réservoir anti-bélier avec une pression décroissante dans le réservoir et en particulier dans la chambre de compression.

La pression dans le réservoir atteint la pression atmosphérique lorsque le niveau de fluide se situe sensiblement au niveau de l'extrémité inférieure du tube plongeur. Dès que le niveau de fluide dans le tube plongeur baisse suite à la baisse de pression dans le réservoir, le clapet inférieur de la boîte à clapet n'est plus immergé. Celui-ci s'ouvre alors et permet à l'air ambiant de pénétrer dans le tube plongeur 6.

Le réservoir fonctionne alors comme une cheminée d'équilibre à la pression atmosphérique et la vidange du réservoir se poursuit à la pression atmosphérique jusqu'à la fin de la vidange, pouvant correspondre par exemple au niveau 9.

Après cette fin de vidange, il y a retour du fluide de la canalisation (ou du réseau) vers le réservoir qui fonctionne d'abord en cheminée d'équilibre à la pression atmosphérique jusqu'à ce que le niveau du fluide atteigne le bas du tube plongeur. Le remplissage du réservoir continuant, le niveau du fluide monte dans la chambre de compression et le réservoir fonctionne alors en réservoir anti-bélier sous pression jusqu'à la fin du remplissage où le niveau du fluide atteint est inférieur ou supérieur à celui du régime permanent de pompage, selon les caractéristiques de l'installation.

Bien évidemment, pendant le fonctionnement en réservoir anti-bélier, lors de cette phase de remplissage, la montée du fluide dans le tube central a été stoppée par la fermeture du clapet soumis à la pression de ce fluide.

Cet appareil présente donc :
- un fonctionnement alterné en réservoir anti-bélier sous pression et en cheminée d'équilibre ;
- une régulation automatique très simple et fiable de la quantité d'air à chaque arrêt de pompe qui entraîne une phase de vidange suivie d'une phase de remplissage.

En l'absence d'entretien très suivi, ou lorsque le fluide circulant dans la canalisation est un fluide chargé, par exemple des eaux usées chargées, on constate l'apparition de dépôts et une accumulation de matières fibreuses au niveau des clapets, ce qui est susceptible d'engendrer une mauvaise étanchéité.

Le but de l'invention est donc de pallier cet inconvénient.

Elle a donc pour objet un réservoir hydropneumatique anti-bélier à régulation d'air automatique pour canalisation ou réseau hydraulique, comprenant un tube plongeur s'étendant dans le réservoir et débouchant vers l'extérieur du corps, et un dispositif d'obturation du tube plongeur assurant la mise en communication sélective du tube avec l'extérieur en fonction du niveau de fluide dans le réservoir.

Selon une caractéristique générale de ce réservoir, le dispositif d'obturation comprend des moyens d'obturation et des moyens de commande des moyens d'obturation séparés des moyens d'obturation de sorte que l'ouverture et la fermeture des moyens d'obturation s'effectuent sans contact desdits moyens d'obturation avec le fluide emplissant le réservoir.

Selon une autre caractéristique, les moyens d'obturation comprennent au moins un clapet situé au voisinage d'une extrémité du tube s'étendant à l'extérieur du réservoir.

Dans un mode de réalisation, les moyens de commande comprennent une capacité de volume variable sous l'action de la pression régnant dans une chambre de compression du réservoir, ladite capacité de volume variable étant adaptée pour actionner ledit clapet en fonction de sa variation de volume.

Par exemple, la capacité de volume variable comporte une première paroi d'extrémité raccordée à la chambre de compression par une conduite, une paroi périphérique à soufflet, et une deuxième paroi d'extrémité liée audit clapet.

Par exemple, le clapet comporte une partie inférieure, de forme bombée et de faible densité apte à permettre la fermeture du clapet sous la poussée de fluide en cas de dysfonctionnement des moyens d'obturation.

Les moyens d'obturation peuvent encore comprendre au moins une vanne située au voisinage d'une extrémité du tube s'étendant à l'extérieur du réservoir.

Dans un mode de réalisation, les moyens de commande peuvent comprendre un pressostat associé à ladite vanne et une conduite qui communique avec le pressostat et avec la chambre de compression du réservoir.

Dans encore un mode de réalisation, le tube central peut être équipé, sous la vanne, d'un clapet-flotteur apte à fermer le tube si l'eau atteint le clapet-flotteur en cas de dysfonctionnement des moyens d'obturation.

Le tube central peut en outre comprendre un prolongement apte à soustraire à l'atteinte de l'eau le clapet-flotteur ou le clapet lorsque les moyens d'obturation fonctionnent normalement et que le niveau de fluide dans le tube central correspond à celui enregistré lors de la compression maximale de l'air.

Selon encore un autre mode de réalisation, la vanne est une vanne électrique, les moyens de commande comportant un détecteur de niveau de fluide dans le réservoir.

Par exemple, le détecteur de niveau est une sonde de détection sans contact.

Le réservoir peut encore comporter une source d'alimentation rechargeable pour l'alimentation de la vanne électrique.

D'autres buts, caractéristiques et avantages de l'invention apparaîtront à la lecture de la description suivante, donnée uniquement à titre d'exemple non limitatif, et faite en référence aux dessins annexés, sur lesquels :
- la figure 1, dont il a déjà été fait mention, illustre l'architecture d'un réservoir hydropneumatique anti-bélier à régulation d'air automatique selon l'état de la technique ;
- la figure 2 montre un premier exemple de réalisation du moyen d'obturation du tube plongeur et du moyen de commande qui lui est associé ;
- la figure 3 illustre une variante de réalisation du moyen d'obturation de la figure 2 ;
- la figure 4 illustre un deuxième mode de réalisation du moyen d'obturation du tube plongeur et du moyen de commande qui lui est associé ;
- la figure 5 illustre un troisième mode de réalisation du moyen d'obturation et du moyen de commande ;
- la figure 6 illustre une variante de réalisation du moyen d'obturation des figures 4 et 5 ; et
- la figure 7 illustre encore une autre variante de réalisation de l'organe d'obturation.

Sur les figures 2 à 5, on va décrire différents modes de réalisation d'un réservoir hydropneumatique conforme à l'invention.

Comme dans l'état de la technique représenté à la figure 1, ce réservoir hydropneumatique est destiné à fonctionner comme réservoir anti-bélier, selon le mode de fonctionnement décrit précédemment. Le fonctionnement général de ce réservoir hydropneumatique ne sera donc pas repris.

Comme précédemment, le réservoir, désigné par la référence numérique générale 10, comprend un corps de réservoir pourvu d'un bac inférieur et d'un couvercle supérieur 11. Sur ce couvercle, est monté un tube plongeur 12 pourvu d'une extrémité inférieure 13 plongeant dans le réservoir 10 et d'une extrémité opposée 14 s'étendant à l'extérieur du corps du réservoir et munie d'un dispositif d'obturation 15 comprenant des moyens d'obturation et des moyens de commande d'obturation.

Toutefois, l'invention ne concernant, pour l'essentiel, que le dispositif d'obturation prévu en partie supérieure du tube plongeur 12, seule la partie supérieure du réservoir 10 a été reprise sur les figures 2 à 5, le reste du réservoir ainsi que son raccordement à la canalisation, étant par ailleurs conformes au réservoir décrit précédemment en référence à la figure 1.

Comme on le voit sur les figures 2 à 5, dans ces différents modes de réalisation, les moyens d'obturation du tube 12 sont situés au niveau de l'extrémité supérieure du tube plongeur, c'est-à-dire généralement au-delà du volume intérieur du réservoir 1.

Ils sont pilotés par des moyens de commande séparés de sorte que, à l'ouverture et à la fermeture, ils demeurent hors de contact du fluide emplissant le réservoir 10.

Dans un premier mode de réalisation, illustré à la figure 2, les moyens d'obturation sont agencés sous la forme d'un clapet 16.

Le clapet 16 peut être à battant, comme illustré à la figure 2, ou être constitué simplement d'une surface plane horizontale pouvant être translatée verticalement jusqu'à venir s'appuyer, en position de fermeture, sur un siège prévu à cet effet dans le tube 12.

On notera cependant que dans les divers modes de réalisation envisageables pour le clapet 16, on prévoira, comme illustré à la figure 3, une forme bombée F et de faible densité en partie inférieure du clapet 16 afin de permettre sa fermeture sous la poussée de l'eau.

Les moyens de commande du clapet sont réalisés sous la forme d'une capacité ou chambre 17 de volume variable, reliée par une liaison 18 au clapet 16 de manière à l'activer en fonction de sa déformation.

Comme on le voit, dans l'exemple de réalisation représenté, la capacité 17 comporte une paroi inférieure 19, qui communique avec la chambre de compression 20 du réservoir 10 par l'intermédiaire d'une conduite 21 qui débouche dans le réservoir 10 au niveau du couvercle 11, de sorte que la pression régnant dans la capacité déformable 17 corresponde à celle qui règne dans la chambre de compression 20.

La capacité 17 comporte encore une paroi périphérique à soufflet 22 et une paroi distale 23 liée au clapet 16 par la liaison 18.

Mais l'on ne sort pas du cadre de l'invention lorsque la capacité 17 est réalisée par tout autre moyen approprié, tel qu'un ballon, une vessie, ..., c'est-à-dire un volume déformable.

Ainsi, lorsque la pression régnant dans la chambre de compression 20 augmente, la déformation consécutive de la capacité 17 provoque une fermeture du clapet 16.

Au contraire, lorsque la pression régnant dans la chambre de compression 20 diminue, le clapet 16 s'ouvre sous l'action combinée du poids du clapet, de la pression atmosphérique régnant au dessus du clapet 16 et sous l'effet de la contraction de la paroi à soufflet 22.

Par exemple, la liaison 18 est une liaison filaire. On peut ainsi, par exemple, prévoir un premier fil 24 qui vient coiffer l'extrémité distale 23 de la capacité 17 et dont les extrémités mutuellement opposées sont reprises par un écarteur 25, et un deuxième fil 26 s'étendant entre l'écarteur 25 et le clapet 16. Bien entendu, on ne sort pas du cadre de l'invention lorsque la liaison 18 est agencée sous une autre forme qui permet un déplacement du clapet selon la pression régnant dans la capacité de volume variable 17.

Le mode de fonctionnement de ce premier mode de réalisation est le suivant.

Lors du remplissage du réservoir, lorsque le niveau d'eau dépasse l'extrémité inférieure 13 du tube plongeur 12, l'augmentation résultant de la pression d'air dans la chambre de compression provoque une dilatation du soufflet, entraînant ainsi, par traction, la fermeture du clapet 16.

A la vidange, lorsque la pression baisse dans la chambre de compression 20, la capacité 17 se contracte et le clapet 16 s'ouvre. On met alors en oeuvre un fonctionnement en cheminée d'équilibre à pression atmosphérique.

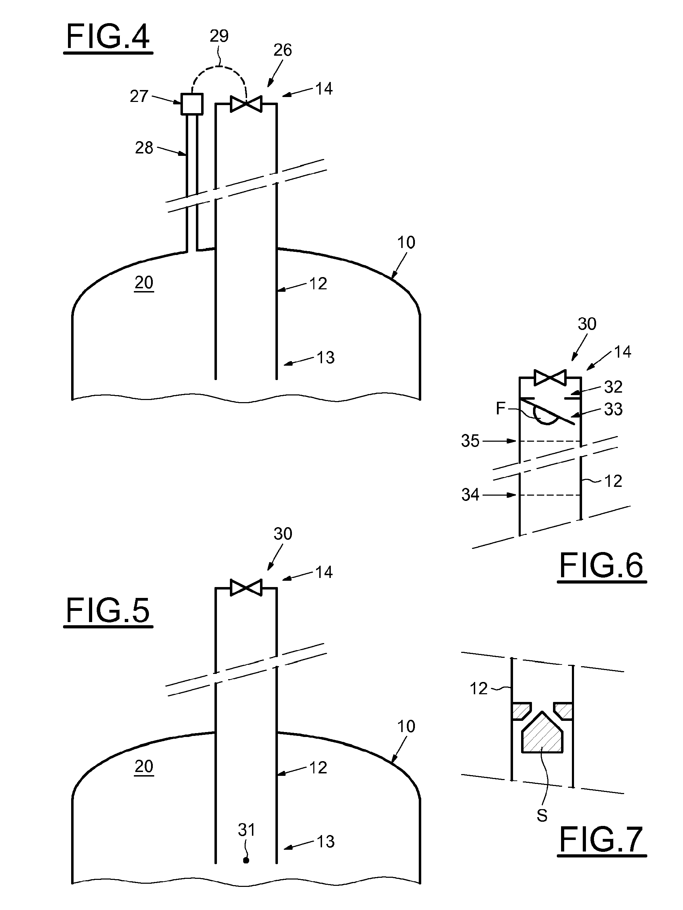

Dans le mode de réalisation illustré à la figure 4, le clapet 16 est remplacé par une vanne 26 et les moyens de commande des moyens d'obturation sont remplacés par un pressostat 27 monté sur une conduite 28 qui débouche dans la chambre de compression 20 au niveau du couvercle 11.

Comme précédemment, la vanne 26 est située au sommet du tube plongeur 12.

Le pressostat 27 est utilisé pour enregistrer l'augmentation de pression d'air dans la chambre de compression 20, qui lui est transmise par la conduite 28, et pour piloter la vanne 26 par l'intermédiaire d'une liaison 29.

Le pressostat 27 est ici calibré pour actionner la vanne 26 lorsque la pression dans la chambre de compression 20 se situe au niveau de la pression atmosphérique.

Le fonctionnement de ce deuxième mode de réalisation est alors le suivant :
Au remplissage du réservoir, lorsque le niveau de fluide dépasse l'extrémité inférieure du tube plongeur 12, l'augmentation de la pression d'air dans la chambre de compression s'exerce sur le pressostat qui ferme alors la vanne 26. On obtient alors un mode de fonctionnement en réservoir anti-bélier.
Au contraire, à la vidange, lorsque la pression baisse et atteint la pression atmosphérique, le pressostat commande l'ouverture de la vanne pour mettre l'intérieur du tube plongeur en communication avec l'extérieur. On obtient alors un mode de fonctionnement en cheminée d'équilibre à la pression atmosphérique.

Selon un troisième mode de réalisation, illustré à la figure 5, les moyens d'obturation du tube plongeur 12 sont ici agencés sous la forme d'une vanne électrique 30 montée au sommet, c'est-à-dire à l'extrémité du tube plongeur. Les moyens de commande sont, quant à eux, réalisés sous la forme d'un détecteur de niveau du fluide (niveau indiqué 31 sur la figure). Ce détecteur est une électrode ou, ce qui est bien préférable car sans aucun contact avec le fluide, du type ultrasons, radar, repérage magnétique ou encore pesée de l'ensemble réservoir plus fluide contenu, etc...

Ce détecteur délivre un signal de commande à la vanne électrique 30.

Ainsi, la vanne s'ouvre et se ferme en fonction du niveau d'eau dans le tube central.

Par exemple, le niveau de seuil prévu pour piloter l'ouverture et la fermeture de la vanne, correspond au niveau d'extrémité inférieure du tube plongeur de manière à mettre l'intérieur du réservoir ou au contraire isoler le réservoir de l'extérieur lorsque le niveau de liquide atteint cette extrémité inférieure.

Ainsi, selon ce mode de réalisation, au remplissage, la vanne se ferme lorsque le niveau d'eau monte dans le réservoir jusqu'à l'extrémité inférieure du tube plongeur et, à la vidange, s'ouvre lorsque le niveau d'eau descend jusqu'à l'extrémité inférieure de ce tube plongeur.

On notera que, dans ce mode de réalisation, on pourra prévoir une source d'alimentation rechargeable, par exemple une batterie pour l'alimentation de la vanne et du détecteur en cas de coupure de l'alimentation du secteur.

Dans les exemples de réalisation décrits en référence aux figures 4 et 5, le moyen d'obturation est constitué par une vanne. En cas d'incident de fonctionnement du moyen d'obturation, comme illustré à la figure 6, il peut être souhaitable de compléter ce moyen d'obturation par un clapet additionnel destiné à fermer le tube 12 si, en cas de défaillance du pressostat 27 ou du détecteur de niveau 31 ou de la vanne, le niveau d'eau dépasse le niveau de seuil prévu pour la fermeture de la vanne.

Comme le révèle la figure 6, dans ce mode de réalisation, le tube 12 est pourvu, juste sous la vanne, d'un orifice calibré 32 doté d'un clapet flotteur 33 destiné à fermer l'orifice 32 si l'eau l'atteint.

Comme le montre cette figure, lors de la fermeture de la vanne 26 ou 30, l'eau se situe au niveau référencé 34.

L'eau atteint le niveau référencé 35 lors de la compression maximum de l'air, la vanne 26 ou 30 fonctionnant normalement. Le niveau 35 doit être inférieur à celui du clapet-flotteur 33, totalement ouvert. Si, en cas d'incident de fonctionnement du moyen d'obturation, l'eau atteint le clapet-flotteur 33, celui-ci ferme l'ouverture 32.

On notera qu'en utilisant des vannes 26 ou 30 prévues et convenant pour se mettre et rester en position ouverte pendant toute la durée d'un incident, le réservoir anti-bélier continue à fonctionner normalement, en cas d'incident, et c'est le clapet-flotteur 33 qui empêche alors tout débordement. Ainsi, lorsque l'on utilise un tel clapet-flotteur 33 en complément de la vanne électrique 30 (figure 5), la source d'alimentation électrique rechargeable, par exemple la batterie, n'est plus nécessaire et peut être omise.

De même, dans le mode de réalisation de la figure 2, c'est le clapet bombé 16 qui empêche tout débordement éventuel en cas de dysfonctionnement.

On notera par ailleurs qu'il peut être nécessaire, lorsque notamment les pressions sont élevées, de prolonger le tube central 12 vers le haut, à partir du sommet du réservoir, afin d'améliorer, si nécessaire, la marge de sécurité pour les moyens d'obturation et de permettre de soustraire à l'atteinte de l'eau soit le clapet 16, soit le clapet-flotteur 33, lorsque les moyens d'obturation sont en fonctionnement normal et que le niveau d'eau dans le tube central 12 correspond à celui enregistré lors de la compression maximale de l'air...

On notera enfin que la capacité de volume variable et le pressostat doivent agir sous de faibles compressions d'air. Mais ils ne doivent pas être détériorés par de fortes valeurs enregistrées en régime permanent de pompage ou lors du premier remplissage suivant une vidange. Un remède consiste alors à installer, comme illustré à la figure 7, une soupape S tarée ou dispositif équivalent sur le tube 21 (figure 2) ou 28 (figure 4) qui, lorsque la pression est susceptible d'atteindre un niveau pouvant détériorer la capacité de volume variable ou le pressostat, ferme ce tube.

Comme on le conçoit, l'invention qui vient d'être décrite dans les différents modes de réalisation envisagés permet d'actionner les moyens d'obturation du tube plongeur sans contact avec le liquide emplissant le réservoir, ce qui permet de les préserver, en particulier lorsque le liquide est constitué par des eaux usées chargées ou en l'absence d'entretien très suivi.

## Revendications

1. Réservoir hydropneumatique anti-bélier pour canalisation ou réseau hydraulique, comprenant un tube plongeur (12) s'étendant dans le réservoir (10) et débouchant vers l'extérieur du réservoir, et un dispositif (15) d'obturation du tube plongeur assurant la mise en communication sélective du tube (12) avec l'extérieur en fonction du niveau de fluide dans le réservoir, **caractérisé en ce que** le dispositif d'obturation comprend des moyens d'obturation (16 ; 26 ; 30) et des moyens (17 ; 27 ; 31) de commande d'obturation séparés des moyens d'obturation de sorte que l'ouverture et la fermeture des moyens d'obturation s'effectuent sans contact desdits moyens d'obturation avec le fluide emplissant le tube plongeur.

2. Réservoir selon la revendication 1, **caractérisé en ce que** les moyens d'obturation comprennent au moins un clapet (16) situé à une extrémité du tube s'étendant à l'extérieur du réservoir.

3. Réservoir selon l'une des revendications 1 et 2, **caractérisé en ce que** les moyens de commande comprennent une capacité (17) de volume variable sous l'action de la pression régnant dans une chambre de compression (20) formée dans le réservoir, ladite capacité de volume variable étant adaptée pour actionner ledit clapet en fonction de sa variation de volume.

4. Réservoir selon la revendication 3, **caractérisé en ce que** la capacité de volume variable comporte une première paroi d'extrémité (19) raccordée à la chambre de compression par une conduite (21), une paroi périphérique (22) à soufflet et une deuxième paroi d'extrémité (23) liée audit clapet.

5. Réservoir selon l'une quelconque des revendications 2 à 4, **caractérisée en ce que** le clapet comporte, en partie inférieure, une forme bombée et de faible densité apte à permettre la fermeture du clapet sous la poussée de fluide en cas de dysfonctionnement des moyens d'obturation.

6. Réservoir selon la revendication 1, **caractérisé en ce que** les moyens d'obturation comprennent au moins une vanne (26 ; 30) située à l'extrémité du tube (12) s'étendant à l'extérieur du réservoir.

7. Réservoir selon la revendication 6, **caractérisé en ce que** les moyens de commande comprennent un pressostat (27) associé à ladite vanne et une conduite (28) qui communique avec le pressostat et avec une chambre de compression (20) du réservoir.

8. Réservoir selon l'une des revendications 6 et 7, **caractérisé en ce que** le tube central (12) est équipé, sous la vanne (26 ; 30), d'un clapet-flotteur (33) apte à fermer le tube (12) si l'eau atteint le clapet-flotteur (33) en cas de dysfonctionnement des moyens d'obturation.

9. Réservoir selon l'une quelconque des revendications 2 à 5 ou 8, **caractérisé en ce que** le tube central comprend un prolongement apte à soustraire à l'atteinte de l'eau le clapet-flotteur (33) ou le clapet (16) lorsque les moyens d'obturation fonctionnent normalement et que le niveau de fluide dans le tube central (12) correspond à celui enregistré lors de la compression maximale de l'air.

10. Réservoir selon la revendication 6, **caractérisé en ce que** la vanne (30) est une vanne électrique, les moyens de commande comportant un détecteur de niveau de fluide dans le réservoir.

11. Réservoir selon la revendication 10, **caractérisé en ce que** le détecteur de niveau est une sonde de détection sans contact.

12. Réservoir selon l'une des revendications 10 et 11, **caractérisé en ce qu'**il comporte une source d'alimentation rechargeable pour l'alimentation de la vanne électrique.
